# EUROPÄISCHE PATENTANMELDUNG

(11) **EP 1 522 421 A2**
(43) Veröffentlichungstag der Anmeldung: **13.04.2005**
(21) Anmeldenummer: 04024050.9
(22) Anmeldetag: 08.10.2004
(51) Int. Cl.: B60B 27/02

(54) **Verfahren zur Herstellung von Komponenten für Fahrräder**

(30) Priorität: 08.10.2003 DE 10346689
(71) Anmelder: DT Swiss AG, 2500 Biel (CH)
(72) Erfinder: Spahr, Stefan, 2543 Lengau (CH); Kurth, Rudolf, 3292 Busswil b. Büren (CH)
(74) Vertreter: Wallinger, Michael, Dr.

(57) **Zusammenfassung**

Ein Verfahren zur Herstellung einer Nabe insbesondere für Fahrräder und dergleichen wobei eine Wickeleinrichtung, welche wenigstens eine erste Formgebungseinrichtung (3) aufweist, bereitgestellt wird, eine vorgegebene Anzahl von Fasern auf die erste Formgebungseinrichtungaufgebracht (3) wird, wenigstens ein ersten Vernetzungsmittels auf wenigstens einen Teil der Fasern aufgebracht wird, die erste Formgebungseinrichtung in eine zweite Formgebungseinrichtung (13) eingebracht wird und die erste Formgebungseinrichtung (3) mit wenigstens den Fasern und wenigstens dem ersten Vernetzungsmittel gegenüber der zweiten Formgebungseinrichtung ausgedehnt wird, wobei die Formgebungseinrichtungen (3,13) derart aufeinander abgestimmt sind, dass ein die Fasern und das Vernetzungsmittel aufweisender ausgedehnter Körper eine im wesentlichen konstante Dicke aufweist.

## Beschreibung

Die vorliegende Erfindung bezieht sich auf ein Verfahren zur Herstellung von Komponenten, insbesondere für Fahrräder und dergleichen. Die Erfindung wird unter Bezugnahme auf Fahrrad-Naben beschrieben; es wird jedoch darauf hingewiesen, dass das Verfahren auch für weitere Fahrradkomponenten, wie Rahmenelemente, Rohre und dergleichen Anwendung finden kann.

Derartige Naben sind aus dem Stand der Technik seit langem bekannt. Bei der Herstellung von Fahrrädern wird insbesondere im Bereich des Hochleistungssports, aber auch im Bereich des Breitensports zunehmend darauf geachtet, das Gewicht der Fahrräder bzw. der einzelnen Komponenten zu reduzieren. Speziell für Fahrradnaben sind daher Naben aus dem Stand der Technik bekannt, welche aus Carbon hergestellt sind.

Bei den aus dem Stand der Technik bekannten Herstellungsverfahren für Fahrradnaben weisen die Verfahrensprodukte, das heißt die fertiggestellten Fahrradnaben eine vergleichsweise unebene Außenoberfläche auf, und müssen daher nachbearbeitet werden, was eine Erhöhung der Herstellungskosten bewirkt. Dies bedeutet, dass die Naben nach dem Stand der Technik zwar bereits zufriedenstellende Eigenschaften aufweisen, jedoch die Qualität insbesondere der Oberfläche weiter verbessert werden kann.

Der vorliegenden Erfindung liegt daher die Aufgabe zugrunde, die Herstellungskosten für Fahrradnaben zu senken. Daneben soll durch das erfindungsgemäße Verfahren die Qualität insbesondere der Oberflächen verbessert werden. Dies wird erfindungsgemäß durch ein Verfahren zur Herstellung von Naben, insbesondere für Fahrräder und dergleichen erreicht, bei welchem in einem Verfahrensschritt eine erste Formgebungseinrichtung bereitgestellt wird. Auf diese erste Formgebungseinrichtung wird eine vorgegebene Anzahl von Fasern aufgebracht, sowie wenigstens ein erstes Vernetzungsmittel auf wenigstens einen Teil der Fasern aufgebracht. Ferner wird die erste Formgebungseinrichtung in eine zweite Formgebungseinrichtung eingebracht. In einem weiteren Verfahrensschritt wird die erste Formgebungseinrichtung mit wenigstens den Fasern und wenigstens dem ersten Vernetzungsmittel gegenüber der zweiten Formgebungseinrichtung ausgedehnt, wobei die Formgebungseinrichtungen in der Art aufeinander abgestimmt sind, dass ein die Fasern und das Vernetzungsmittel aufweisender ausgedehnter Körper eine im Wesentlichen konstante Dicke aufweist.

Unter einem Aufbringen der Fasern wird dabei bevorzugt ein Auflegen der Fasern auf die erste Formgebungseinrichtung verstanden. Eine Möglichkeit besteht darin, dass die Fasern, bzw. das Fasergewebe auf die erste Formgebungseinrichtung aufgewickelt werden. Dabei wird bevorzugt die Faser in Umfangsrichtung um die Längsrichtung der ersten Formgebungseinrichtung gewickelt. Unter Aufbringen wird jedoch auch verstanden, dass einzelne Schichten bevorzugt wenigstens teilweise übereinander auf die erste Formgebungseinrichtung aufgelegt werden, wobei zwischen den einzelnen Schichten das Vernetzungsmittel angeordnet sein kann.

Die Fasern können jedoch auch gemeinsam mit dem Vernetzungsmittel aufgebracht werden. Dabei liegen die Fasern bereits vor dem Aufbringen auf die erste Formgebungseinrichtung gemeinsam mit dem vernetzungsmittel, welches in die Fasern eingebracht wurde, vor. Aus diesem Grunde kann das Aufbringen der Fasern sowie das Aufbringen des Vernetzungsmittels auch zeitlich zusammenfallen. Bei einer bevorzugten Variante handelt es sich bei den Fasern um ein Kohlenstofffasergewebe mit einer Vernetzungsmittelmatrix.

Dabei können die Fasern sowohl entlang der Längsrichtung als auch in Umfangsrichtung auf die erste Formgebungseinrichtung aufgelegt werden. Auch können einzelne Fasern entlang der Längsrichtung und andere Fasern in Umfangsrichtung aufgelegt werden.

Die Fasern können vor dem Aufbringen auf die erste Formgebungseinrichtung Einschnitte aufweisen, um sich an die sich in Längsrichtung ändernden Querschnitte der ersten Formgebungseinrichtung anzupassen. Daneben können die Fasern auch vor dem Aufbringen auf die erste Formgebungseinrichtung zugeschnitten sein.

Unter Ausdehnen wird verstanden, dass zumindest in dem betreffenden Verfahrensschritt das Volumen der ersten Formgebungseinrichtung wenigstens geringfügig vergrößert wird. Bevorzugt erreicht die erste Formgebungseinrichtung in diesem Schritt wieder ihr Ausgangvolumen, d.h. das Volumen, welches sie vor dem Aufbringen der Fasern hatte. Dies bedeutet, dass durch das Aufbringen, bzw. während des Aufbringens der Fasern bevorzugt das Volumen der ersten Formgebungseinrichtung reduziert wurde, diese insbesondere wenigstens geringfügig zusammengedrückt wurde. Es ist jedoch auch möglich, dass durch das Ausdehnen die erste Formgebungseinrichtung ein Endvolumen erreicht, welches deren Ausgangsvolumen übersteigt.

Umgekehrt ist es auch denkbar, dass die erste Formgebungseinrichtung während des Aufbringens der Fasern stärker komprimiert als in dem oben genannten Verfahrensschritt ausgedehnt wird. In diesem Fall ist die Größe bzw. das Volumen, welches die erste Formgebungseinrichtung nach dem Ausdehnen erreicht geringer als die Ausgangsgröße vor dem Aufbringen der Fasern.

Ferner ist es auch möglich, dass die erste Formgebungseinrichtung während des Aufbringens der Fasern ungleichmäßig komprimiert wird, so dass nach dem Ausdehnen einige Abschnitte einen größeren Querschnitt als der Ausgangskörper d.h. die erste Formgebungseinrichtung vor dem Aufbringen der Fasern haben und andere Abschnitte einen kleineren Querschnitt.

Der Begriff ausgedehnter Körper bezieht sich daher auf einen Körper der in dem obengenannten Verfahrensschritt ausgedehnt wurde. Es spielt daher in diesem Zusammenhang keine Rolle, ob die erste Formgebungseinrichtung, auf die die Fasern aufgewickelt sind, durch das Aufbringen zusammengepresst wurde.

Der Vorteil dieser gegenseitigen Abstimmung besteht darin, dass beim Einbringen der ersten Formgebungseinrichtung in die zweite Formgebungseinrichtung der Abstand zwischen beiden Formgebungseinrichtungen im Bereich der gesamten Oberfläche im Wesentlichen konstant ist, und auf diese Weise, wenn die erste Formgebungseinrichtung gegenüber der zweiten Formgebungsseinrichtung ausgedehnt wird, auf die zwischen den Formgebungseinrichtungen angeordneten Fasern und das Vernetzungsmittel ein im Wesentlichen gleichförmiger Druck über die gesamte Oberfläche ausgeübt wird. Dies führt dazu, dass das fertige Produkt einerseits eine im Wesentlichen über die gesamte Oberfläche hin konstante Dicke sowie eine vergleichsweise ebene Oberfläche aufweist und daher die Oberfläche nicht mehr in einem weiteren Verfahrensschritt nachbearbeitet werden muss.

Unter einer Formgebungseinrichtung wird eine Einrichtung verstanden, die insbesondere, aber nicht ausschließlich, durch ihre geometrische Gestalt derart auf ein zu behandelndes Material einwirkt, dass dieses Material während eines Verfahrens eine bestimmte, durch die Formgebungseinrichtung vorgegebene Form annimmt. Dabei kann eine Formgebungseinrichtung das Material sowohl durch ihre Außenfläche, als auch durch ihre Innenfläche oder durch beide Flächen beeinflussen.

Unter einem Einbringen der ersten Formgebungseinrichtung in eine zweite Formgebungseinrichtung wird verstanden, dass die erste Formgebungseinrichtung wenigstens teilweise von der zweiten Formgebungseinrichtung im eingebrachten Zustand umgeben wird. Bevorzugt wird im Wesentlichen das gesamte Volumen der ersten Formgebungseinrichtung von der zweiten Formgebungseinrichtung aufgenommen. Dabei befindet sich das zu behandelnde Material räumlich im Wesentlichen zwischen dem Außenumfang der ersten Formgebungseinrichtung und dem Innenumfang der zweiten Formgebungseinrichtung.

Unter einer Abstimmung der Formgebungseinrichtungen wird verstanden, dass die jeweils an der Formgebung des Materials beteiligten Oberflächen, das heißt in diesem Falle die Außenfläche der ersten Formgebungseinrichtung, und die Innenfläche der zweiten Formgebungseinrichtung, Oberflächen aufweisen, die miteinander in einer vorgegebenen Beziehung stehen. Dabei weist die Außenfläche der ersten Formgebungseinrichtung bevorzugt im Wesentlichen die gleiche Gestalt auf, wie die Innenoberfläche der zweiten Formgebungseinrichtung, wobei die Oberfläche der ersten Formgebungseinrichtung kleiner ist, als die Innenoberfläche der zweiten Formgebungseinrichtung. Anders ausgedrückt, ist das von der Innenoberfläche der zweiten Formgebungseinrichtung eingeschlossene oder umgebene Volumen größer als das Volumen, welches von der Außenfläche der ersten Formgebungseinrichtung eingeschlossen oder umgeben wird. Bevorzugt ist im zusammengebauten Zustand der Abstand zwischen der ersten Formgebungseinrichtung und der zweiten Formgebungseinrichtung im Wesentlichen über die gesamte Oberfläche konstant.

Ein Beispiel für eine derartige Abstimmung zweier Formgebungseinrichtungen wären zwei Hohlzylinder, die ineinander gestellt werden, wobei ein Zylinder einen größeren Durchmesser aufweist als der andere.

In einem weiteren Verfahrensschritt wird die erste Formgebungseinrichtung aus dem ausgedehnten Körper entnommen.

Zu diesem Zweck besteht die erste Formgebungseinrichtung wenigstens teilweise aus einem flexiblen Material. Bevorzugt ist die erste Formgebungseinrichtung aus Silikon hergestellt oder enthält Silikon.

Bevorzugt ist das flexible Material derart gestaltet, dass die erste Formgebungseinrichtung wenigstens in radialer Richtung wenigstens teilweise deformierbar ist. Durch diese Deformierbarkeit wird erreicht, dass die erste Formgebungseinrichtung aus dem ausgedehnten Körper entnommen werden kann. Dabei ist die erste Formgebungseinrichtung bevorzugt wenigstens so weit in radialer Richtung deformierbar, dass die Abschnitte mit den größten Querschnitten durch die Abschnitte mit den kleinsten Querschnitten innerhalb des ausgedehnten Körpers bewegt werden können.

Der ausgedehnte Körper besteht dabei im Wesentlichen aus den Fasern, auf welche das Vernetzungsmittel aufgebracht wurde, bzw. aus dem sich im Prozess ergebenden vernetzten Material.

Bei einem weiteren erfindungsgemäßen Verfahren wird eine dritte Formgebungseinrichtung, auf welche eine Faser aufgebracht ist, in einen Vorkörper eingebracht, und die auf die dritte Formgebungseinrichtung aufgebrachte Faser mit dem ausgedehnten Körper verbunden. Dabei wird durch eine Veränderung wenigstens einer thermodynamischen Zustandsgröße, bevorzugt durch eine Erhöhung der Temperatur, eine Vernetzung der Fasern, und damit eine Verbindung der Faser mit dem ausgedehnten Körper bewirkt bzw. beeinflusst. Genauer gesagt, tritt durch die Erhöhung der Temperatur eine Vernetzung der Fasern mit dem Vernetzungsmittel ein.

Bevorzugt handelt es sich bei dem Vorkörper um den ausgedehnten Körper, der durch das oben beschriebene Verfahren hergestellt wurde. Bevorzugt wird daher bei dem erfindungsgemäßen Verfahren bei zwei unterschiedlichen Verfahrensschritten, die besonders bevorzugt zeitlich auseinander fallen, eine Vernetzung von Fasern bewirkt. Dabei wird bevorzugt in einem der Schritte, wie ausgeführt, ein Vorkörper bzw. ausgedehnter Körper hergestellt, der jedoch bereits an seiner Außenoberfläche die Gestalt des Endprodukts, das heißt der fertigen Nabe, aufweist, ohne dass hierzu eine weitere Nachbehandlung nötig wäre.

Anschließend wird der Vorkörper an seiner Innenoberfläche durch Aufbringen weiteren Materials weiterverarbeitet.

Bevorzugt werden in einem weiteren Verfahrensschritt der ausgedehnte Körper und die dritte Formgebungseinrichtung vor dem Erwärmen miteinander verspannt um während der weiteren Verarbeitung, insbesondere während des Erwärmens einen sicheren Halt der Komponenten zu gewährleisten.

Dieses Verspannen dient bevorugt dazu, die einzelnen Komponenten gegeneinander zu stabilisierten, wobei insbesondere die Formgebungseinheiten der dritten Fromgebungseinrichtung in Längsrichtung des ausgedehnten Körpers miteinander verspannt werden. Daneben sollen durch das Verspannen die einzelnen Komponenten gegeneinander für eine eventuelle Nachbearbeitung positioniert werden.

Dabei weist bevorzugt die dritte Formgebungseinrichtung eine Außenkontur auf, die im Wesentlichen der Innenkontur der herzustellenden Nabe entspricht.

Ferner wird bevorzugt vor dem Aufbringen der Fasern auf die erste Formgebungseinrichtung diese auf einen bevorzugt ein Metall aufweisenden Kern geschoben. Dadurch wird bewirkt, dass während des Aufbringens des Fasermaterials bzw. der einzelnen Carbonschichten die erste Formgebungseinrichtung in ihrer Form stabil gehalten wird. Nach dem Aufbringen bzw. dem Aufwickeln der Fasern auf die erste Formgebungseinrichtung wird der Kern wieder aus der ersten Formgebungseinrichtung entfernt. Auf diese Weise wird erreicht, dass die erste Formgebungseinrichtung nunmehr gegenüber der zweiten Formgebungseinrichtung expandiert werden kann. Diese Expansion erfolgt vorzugsweise durch Erhöhung des Innendrucks in der ersten Formgebungseinrichtung. Dazu wird bevorzugt die erste Formgebungseinrichtung derart in die zweite Formgebungseinrichtung eingebracht, dass diese im Wesentlichen luftdicht abgeschlossen ist. Bevorzugt handelt es sich bei der Faser um eine Kohlenstofffaser. Daneben könnten jedoch auch andere Materialien, wie insbesondere, aber nicht ausschließlich, Glas, Aramit, Polyester, Diolen oder dergleichen verwendet werden.

Bevorzugt sind die Fasern zu einem bevorzugt langgestreckten Fasergewebe zusammengefügt, welches um die erste Formgebungseinrichtung gewickelt wird. Dabei wird bevorzugt zunächst die Kohlenstofffaser gewickelt, danach das Gewebe, und danach wieder Kohlenstofffaser.

Bevorzugt werden auch um die dritte Formgebungseinrichtung Fasern der oben genannten Art gewickelt.

Bevorzugt ist das Vernetzungsmittel aus einer Gruppe von Vernetzungsmitteln ausgewählt, welche Harze, wie insbesondere, aber nicht ausschließlich, Epoxidharze, Polyurethan, Polyester, Vinylester und dergleichen enthält. Ferner weist die zweite Formgebungseinrichtung bevorzugt wenigstens zwei im Wesentlichen zueinander an der Innenkontur symmetrische Formgebungseinheiten auf. Besonders bevorzugt weist die Innenkontur eine rotationssymmetrische Gestalt auf.

Die Erfindung ist ferner auf eine Nabe, insbesondere für Fahrräder und dergleichen gerichtet, welche einen im Wesentlichen rotationssymmetrischen Außenkörper mit einer im Wesentlichen konstanten Dicke aufweist. Unter dem Außenkörper wird dabei das Zwischenprodukt des oben beschriebenen Verfahrens verstanden, das heißt, der ausgedehnte Körper bzw. Vorkörper.

Bevorzugt weist die Nabe an ihren Endabschnitten im Wesentlichen in Umfangsrichtung gleichmäßig verteilte Öffnungen auf.

Weitere Vorteile und Ausführungsformen des erfindungsgemäßen Verfahrens ergeben sich aus den beigefügten Zeichnungen.

Darin zeigen:
- Fig. 1: die für das erfindungsgemäße Verfahren zu verwendende erste Formgebungseinrichtung mit der optional zu verwendenden Stabilisierungseinrichtung;
- Fig. 2: eine Detailansicht der Stabilisierungseinrichtung
- Fig. 3: eine Formgebungseinheit der zweiten Formgebungseinrichtung mit eingelegter erster Formgebungseinrichtung;
- Fig. 4: eine weitere Formgebungseinheit der zweiten Formgebungseinrichtung;
- Fig. 5: die geschlossene, verschraubte zweite Formgebungseinrichtung;
- Fig. 6: den erhaltenen, nach dem erfindungsgemäßen Verfahren hergestellten ausgedehnten Körper;
- Fig. 7: eine Querschnittansicht des Körpers
- Fig. 8: die geöffnete dritte Formgebungseinrichtung
- Fig. 9: die geschlossene dritte Formgebungseinrichtung mit ausgedehntem Körper
- Fig. 10: eine Querschnittansicht des ausgedehnten Körpers nach der Weiterbearbeitung mittels der dritten Formgebungseinrichtung

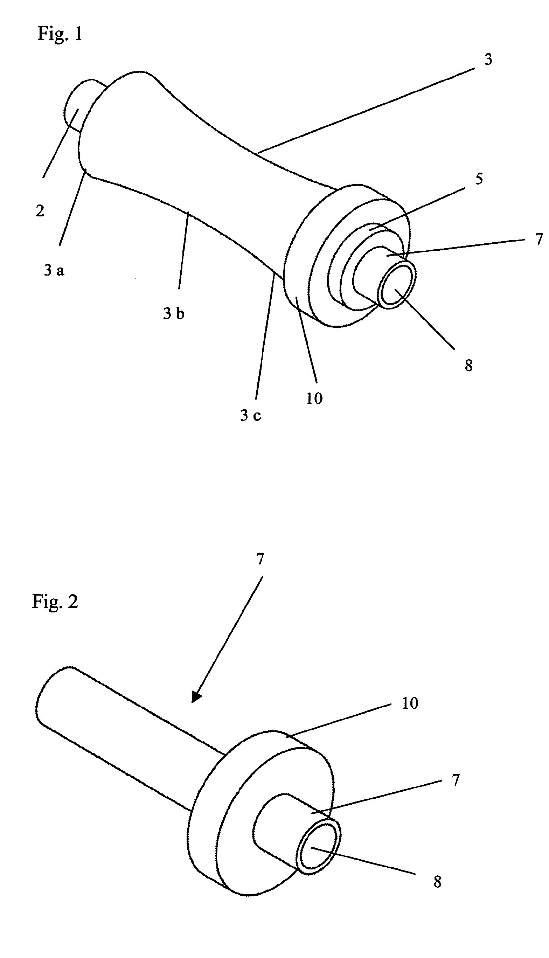

Fig. 1 zeigt die erste Formgebungseinrichtung 3 in einer Gesamtansicht. Das Bezugszeichen 2 bezieht sich auf einen an einem der beiden Enden angebrachten im Wesentlichen zylinderförmigen Körper, der bevorzugt als Griff verwendet wird und damit die Handhabung der Formgebungseinrichtung beim erfindungsgemäßen Aufbringen der Fasern erleichtert. Bevorzugt weist der zylinderförmige Körper 2 ein Innengewinde auf, welches die Verschraubung mit der Stabilisierungseinrichtung ermöglicht. Die Bezugszeichen 3a und 3c beziehen sich auf Endabschnitte mit im Wesentlichen kreisförmigen Querschnitten, deren Durchmesser zwischen 0,5 cm und 10 cm, bevorzugt zwischen 2 cm und 5 cm und besonders bevorzugt zwischen 3 cm und 4 cm liegt. Bezugszeichen 3b zeigt den sich verjüngenden Mittelteil. Der Mittelteil weist einen minimalen Außendurchmesser von 0,5 cm bis 10 cm, bevorzugt zwischen 2 und 3 cm und besonders bevorzugt zwischen 2,3 cm und 2,8 cm auf. Daraus ergibt sich , dass der Mittelteil an der engsten Stelle bevorzugt einen Durchmesser von 65- 75 % vom Durchmesser der Endabschnitte aufweist.

Die erste Formgebungseinrichtung weist dabei eine im Wesentlichen rotationssymmetrische Gestalt auf. Die erste Formgebungseinrichtung weist einen nicht gezeigten Hohlraum in Längsrichtung auf, in welchen die Stabilisierungseinrichtung 7 eingeschoben werden kann. Bezugszeichen 7 zeigt die, bevorzugt zylinderförmige, innenliegende Stabilisierungseinrichtung, die bevorzugt aus Metall hergestellt ist. Bezugszeichen 10 bezieht sich auf eine ringförmige Verdickung der Stabilisierungseinrichtung, die zur zusätzlichen Stabilisierung insbesondere während des Aufbringens der Fasern und zur Abdichtung dient.

Bezugszeichen 5 bezieht sich auf die Verschraubung der innenliegenden Stabilisierungseinrichtung; die in einer bevorzugten Ausführungsform sechskantig ausgeführt ist um mit einem geeigneten Werkzeug festgezogen oder gelockert werden zu können.

Fig. 2 zeigt die Stabilisierungseinrichtung 7. Die Stabilisierungseinrichtung ist bevorzugt länger als die erste Formgebungseinrichtung 3 und wird derart in diese eingeschoben, dass wenigstens einer der beiden Endabschnitte der Stabilisierungseinrichtung in Längsrichtung über die Endabschnitte der ersten Formgebungseinrichtung hinausragt. Der über die Längsrichtung der ersten Formgebungseinrichtung 3 hinausragende Abschnitt kann bevorzugt gemeinsam mit dem zylindrischen Körper 2 zur Erleichterung bei der Aufbringung bzw. Aufwicklung des Fasermaterials dienen. Dabei können auch (nicht gezeigte) bevorzugt motorgestützte Aufwickeleinrichtungen verwendet werden.

Die Stabilisierungseinrichtung weist in dieser Ausführungsform einen im wesentlichen zylindrischen Querschnitt auf und ist bevorzugt innen hohl. Durch das Einführen der Stabilisierungseinrichtung kann die erste Formgebungseinrichtung stabilisiert werden, so dass das Aufbringen der vorgeschnittenen Kohlenstofffasergewebe und der als Vernetzungsmittel dienenden Epoxydharzmatrix erleichtert werden kann. Der durch Bezugszeichen 8 bezeichnete Hohlraum in der Stabilisierungseinrichtung dient zur Gewichtsersparnis; er kann in Verbindung mit einer entsprechend durchlässigen Außenwand auch zur Gaszufuhr zum Zwecke der Druckerhöhung verwendet werden. Die Stabilisierungseinrichtung wird nach dem Aufbringen wieder aus der ersten Formgebungseinrichtung entnommen, sofern sie nicht zum Druckaufbau verwendet wird.

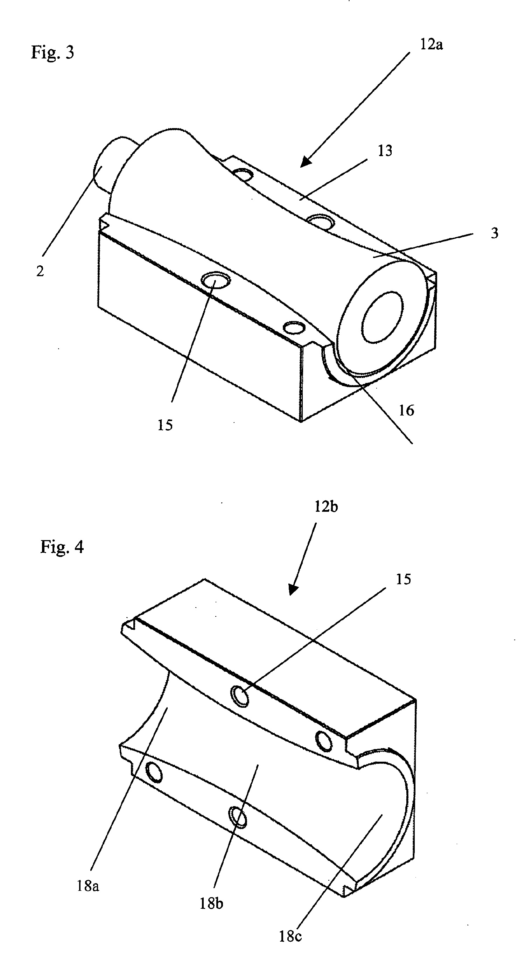

Fig. 3 zeigt eine Formgebungseinheit 12a der zweiten Formgebungseinrichtung 13 mit der in dieser eingebrachten ersten Formgebungseinrichtung in einer Draufsicht. Dabei wurden die Fasern sowie das Vernetzungsmittel bereits auf die erste Formgebungseinrichtung aufgebracht. Bezugszeichen 15 zeigt eine Aufnahme für die Verschraubung; die Aufnahmelöcher sind bevorzugt diagonal gegenüber angeordnet, um eine gleichmäßige Druckverteilung zu erreichen. Bezugszeichen 16 bezieht sich auf den erfindungsgemäß über die gesamte Form im Wesentlichen konstanten Abstand zwischen der ersten 3 und zweiten 13 Formgebungseinrichtung, der die erstrebte ebene Oberfläche ermöglicht.

Fig. 4 zeigt eine weitere Formgebungseinheit 12b der zweiten Formgebungseinrichtung in der Perspektivansicht. Die Bezugszeichen 18a und 18c beziehen sich auf die äußeren Endabschnitte des formgebenden Hohlraumes, Bezugszeichen 18b bezieht sich auf den sich verjüngenden bzw. verjüngten Mittelteil. Hierbei wird die Form der ersten Formgebungseinheit 12a im Wesentlichen widergespiegelt, wobei der mit 16 bezeichnete über die gesamte Form konstante Abstand zwischen 0,1 und 5 mm liegt. In einer bevorzugten Ausführungsform ist der Abstand zwischen 0,2 und 1 mm, in einer besonders bevorzugten Ausführungsform beträgt der Abstand zwischen 0,3 und 0,9 mm.

Wie aus Fig. 4 ersichtlich, ragen die Endabschnitte 18a und 18c über den im wesentlichen quaderförmigen Grundkörper 13 der zweiten Formgebungseinrichtung hinaus. Diese herausragenden Abschnitte dienen der im wesentlichen luftdichten Abdichtung während der Ausdehnung der ersten Formgebungseinrichtung 3.

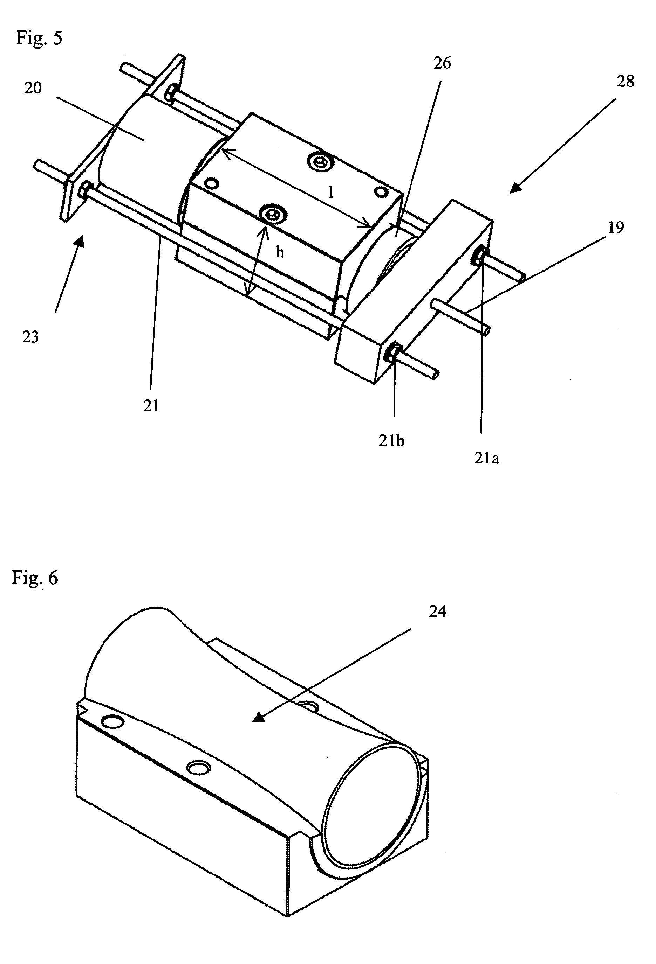

Fig. 5 zeigt die geschlossene zweite Formgebungseinrichtung. Die Einrichtung wird in horizontaler Richtung h bevorzugt durch die Verwendung von Imbusschrauben verschlossen. In vertikaler Längsrichtung 1 wird der Verschluss durch eine außenliegende Rahmeneinrichtung 23 erreicht, die zwei Metallstangen 21 aufweist, die in ihrer Gesamtlänge die Außenabmessungen der zweiten Formgebungseinrichtung überschreiten; in einer bevorzugten Ausführungsform sind die Stangen an wenigstens einem, bevorzugt an beiden Enden mit einem Schraubgewinde versehen.

Bezugszeichen 20 bezieht sich auf einen an einem Ende der zweiten Formgebungseinrichtung angebrachten im wesentlichen zylinderförmigen Körper. Der Körper 20 dient bevorzugt der Abdichtung des Systems gegenüber der Umgebung. Zu diesem Zweck wird der Körper 20 über die über den quaderförmigen Grundkörper 13 herausragenden Endabschnitte 18a geschoben. Zum Zweck verbesserter Abdichtung kann zwischen dem Endabschnitt 18a und dem zylindrischen Körper ein (nicht gezeigtes) Dichtmittel, wie insbesondere aber nicht ausschließlich ein O-Ring vorgesehen sein, der, besonders bevorzugt auch in einer in dem Körper 20 vorgesehenen Innennut angeordnet sein kann.

Bevorzugt kann der Körper auch einen zu dem in Fig. 5 gezeigten rechten Ende hin aufgeweiteten Querschnitt aufweisen, wodurch beim Anpressen des Körpers 20 an die zweite Formgebungseinrichtung 3 bzw. die Endabschnitte 18a und 18c eine im wesentlichen dichte Verbindung entsteht. Ferner können auch auf die Außenflächen der Endabschnitte 18a und 18c und/oder auf die Innenflächen des Körpers 20 aufgebrachte Fette oder dergleichen zur Förderung der Abdichtung verwendet werden.

Der Körper 20 ist bevorzugt zu dem in Fig. 5 gezeigten linken Ende hin luftdicht abgeschlossen. Zu diesem Zweck kann im Inneren des Körpers eine (nicht gezeigte) Trennwand vorgesehen sein, die ein Durchströmen von Luft durch den Körper 20 im wesentlichen verhindert. Bevorzugt ist diese Trennwand nahe an dem Bereich 18a der zweiten Formgebungseinrichtung vorgesehen.

Bezugszeichen 26 zeigt einen am anderen Ende der zweiten Formgebungseinrichtung angebrachten weiteren zylindrischen Körper, mit der, mit 19 bezeichneten Zuführungseinrichtung, durch die der Innendruck der Formgebungseinrichtung auf einen Druck zwischen 0,5 und 10 bar, bevorzugt auf einen Druck zwischen 2 und 8 bar, besonders bevorzugt auf einen Druck zwischen 5 und 7 bar erhöht werden kann.

Dabei kann der zweite zylindrische Körper 26 in ähnlicher Weise mit der zweiten Formgebungseinrichtung verbunden werden wie der erste zylindrische Körper 20. Bevorzugt kann auch hier ein Dichtmittel, wie ein Dichtring vorgesehen werden, um eine Abdichtung gegenüber der Umgebung zu erreichen. Weiterhin kann der zweite zylindrische Körper auch über den Endabschnitt 18a geschoben werden oder es können wiederum Fette und dergleichen zur Förderung der Dichtwirkung eingesetzt werden. Bevorzugt ist der zweite zylindrische Körper abgesehen von einer Öffnung für die Durchführung der Zuführungseinrichtung 19 in Fig. 5 nach rechts abgeschlossen.

Bezugszeichen 28 bezieht sich auf eine Druckzuführungseinrichtung die im Zusammenspiel mit den beiden Feststellungseinrichtungen 21a und 21b, die bevorzugt als Schraubenmuttern ausgebildet sind, eine gleichmäßige Erhöhung der Anpresskraft des zweiten zylindrischen Körpers 26 gegenüber der zweiten Formgebungseinrichtung 3 ermöglicht.

Zum Zwecke der Verbindung des Vorkörpers bzw. ausgedehnten Körpers mit den Kohlenstofffasern bzw. dem Vernetzungsmittel wird die gesamte Einrichtung auf 50°C - 200°C, bevorzugt auf 90°C- 150°C, besonders bevorzugt auf 110°C - 130°C erwärmt. Diese Erwärmung kann bevorzugt in einem Ofen erfolgen. Die erhöhte Temperatur wird zwischen 30 und 90 Minuten, bevorzugt zwischen 50 und 70 Minuten aufrecht erhalten. Daneben könnten auch elektrische Heizeinrichtungen wie Heizdrähte, PTC-Elemente oder dergleichen vorgesehen werden.

Fig. 6 zeigt wiederum eine Formgebungseinheit der zweiten Formgebungseinrichtung mit dem darin eingelegten durch die beschriebene Behandlung entstandenen erfindungsgemäßen ausgedehnten Körper, die erste Formgebungseinrichtung wurde in dieser Darstellung bereits entnommen. Der ausgedehnte Körper weist dabei eine Außenoberfläche, die im wesentlichen der Innenfläche 18 der zweiten Formgebungseinrichtung, sowie eine Innenfläche, die im wesentlichen der Außenfläche der ersten Formgebungseinrichtung entspricht auf. Durch das erfindungsgemäße Verfahren ergibt sich dabei eine derart glatte Oberfläche des ausgedehnten Körpers, dass eine Nachbehandlung entfällt. Die Länge des ausgedehnten Körpers liegt zwischen 3 cm und 15 cm, bevorzugt zwischen 6 cm und 11 cm und besonders bevorzugt zwischen 8 cm und 9 cm.

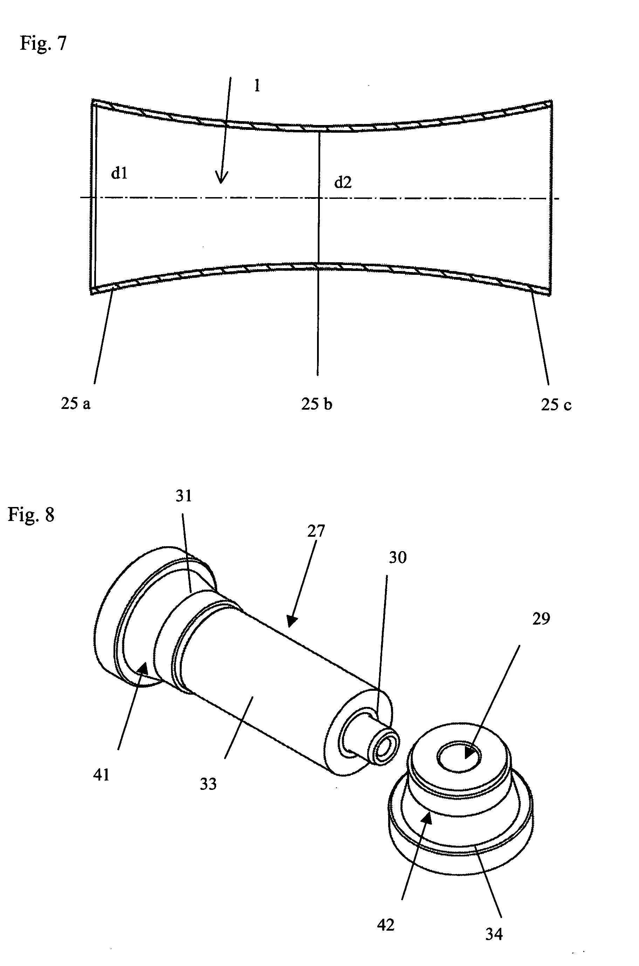

Fig. 7 zeigt eine Querschnittszeichnung des erfindungsgemäßen ausgedehnten Körpers bzw. Vorkörpers. Die Bezugszeichen 25a und 25c beziehen sich auf die Endabschnitte mit im Wesentlichen kreisförmigen Querschnitten, deren Durchmesser d1 zwischen 0,5 cm und 10 cm, bevorzugt zwischen 2 cm und 5 cm und besonders bevorzugt zwischen 3 cm und 4 cm liegt. Bezugszeichen 25b bezieht sich auf den sich verjüngenden Mittelteil. Der Mittelteil weist einen minimalen Innendurchmesser d2 von 0,5 cm bis 10 cm, bevorzugt zwischen 1 und 5 cm und besonders bevorzugt zwischen 2 cm und 3 cm auf. 1 bezeichnet dabei die Rotationsachse bezüglich der der Körper im Wesentlichen rotationssymmetrisch ist. Die sich ergebende Dicke des ausgedehnten Körpers liegt zwischen 0,1 und 5 mm, bevorzugt zwischen 0,3 und 1,5 mm und besonders bevorzugt zwischen 0,3 und 0,9 mm.

Bevorzugt weist der ausgedehnte Körper im Querschnitt einen Außen- bzw. Innenumfang mit konstanten Krümmungsradien auf. Anstelle der angegebenen Maße können jedoch auch abweichende Maße verwendet werden, was letztlich von der jeweils herzustellenden Komponente abhängt. Es werden beispielsweise wesentlich größere Maße gewählt werden, falls in der Nabe Komponenten wie eine Bremseneinrichtung oder Schalteinrichtung untergebracht werden müssen.

Fig. 8 zeigt zwei Teileinheiten der erfindungsgemäßen dritten Formgebungseinrichtung. Bezugszeichen 33 bezieht sich auf den stabilisierenden Mittelteil, der an seinem einen Ende bevorzugt mit einem hervorstehenden Gewinde 30 versehen ist. Dieses Gewinde dient zur Verschraubung der beiden Bestandteile der dritten Formgebungseinrichtung 27, Bezugszeichen 29 bezeichnet den mit einem innenliegenden Gewinde versehenen Hohlraum der zweiten Teileinheit der dritten Formgebungseinrichtung 27. Bezugszeichen 34 bezieht sich auf den im wesentlichen formgebenden Teil der Einrichtung, Bezugszeichen 31 bezeichnet den Vorsprung zur Erstellung der Lagersitze. Dabei können die Vorsprünge den jeweiligen Zielsetzungen angepasst werden.

Die Außenzonen 41, 42 werden mit Fasermaterial umwickelt, bevorzugt aber nicht ausschließlich mit einem dreilagigen Aufbau, bestehend aus einer Lage unidirektionaler Kohlenstofffaser, einer Lage Kohlenstofffasergewebe und einer weiteren Lage unidirektionaler Kohlenstofffaser. Zur Herstellung eines erfindungsgemäßen Körpers können die Komponenten der dritten Formgebungseinrichtung miteinander verspannt werden.

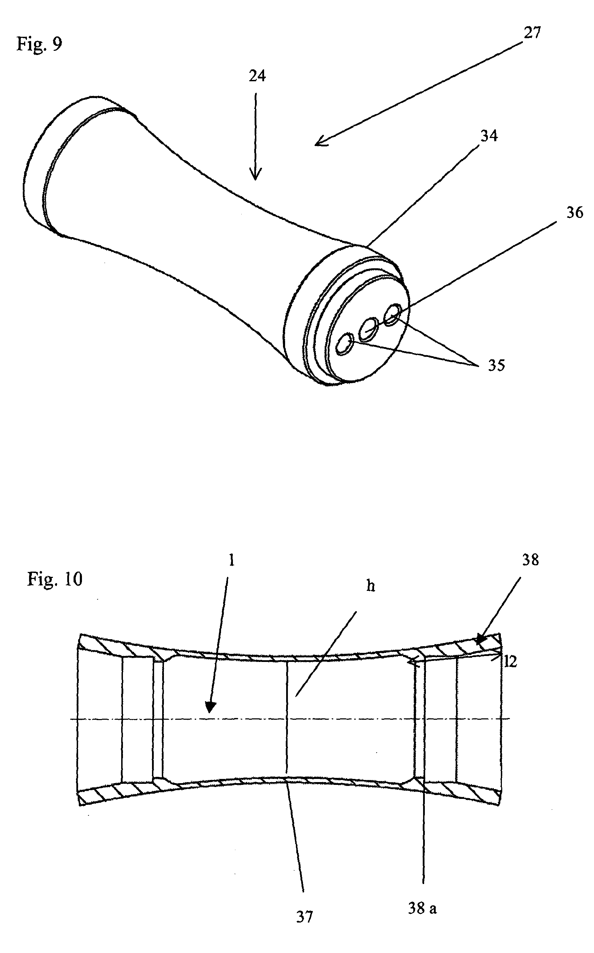

Fig. 9 zeigt die zusammengesetzte dritte Formgebungseinrichtung mit dem aufgesteckten ausgedehnten Körper. Zur Erleichterung des Aufsteckens können die Teile, insbesondere der ausgedehnte Körper vorher mit Hilfe eines Haartrockners erwärmt werden. Dabei liegt bevorzugt der ausgedehnte Körper mit seines Innenoberfläche eng an der dritten Formgebungseinrichtung, bevorzugt jedoch jedenfalls an deren Endabschnitten an.

Bezugszeichen 34 bezieht sich auf den formgebenden Teil der Einrichtung. Die formgebende Einrichtung 34 ist bevorzugt mit zwei Aufnahmen 35 versehen, um mit einem geeigneten Werkzeug festgezogen oder gelockert werden zu können. Bezugszeichen 36 bezieht sich auf den gewichtssparenden Hohlraum, der mittig angeordnet ist.

Zum Zwecke der Verbindung des Vorkörpers bzw. ausgedehnten Körpers mit den neu eingebrachten Kohlenstofffasern wird die gesamte Einrichtung auf 50°C - 200°C, bevorzugt auf 90°C-150°C, besonders bevorzugt auf 110°C - 130°C erwärmt. Diese Erwärmung kann bevorzugt in einem Ofen erfolgen. Die erhöhte Temperatur wird zwischen 30 und 90 Minuten, bevorzugt zwischen 50 und 70 Minuten aufrecht erhalten. Daneben könnten auch elektrische Heizeinrichtungen wie Heizdrähte, PTC-Elemente oder dergleichen vorgesehen werden.

Fig. 10 zeigt eine Querschnittszeichnung des erfindungsgemäß hergestellten Körpers bzw. der Nabe. L bezeichnet dabei die Rotationsachse um die der Körper im wesentlichen rotationssymmetrisch ist. H bezeichnet die Achse zu der der Körper im wesentlichen symmetrisch ist. L2 bezeichnet den rechtsseitigen mit der in Fig. 8 gezeigten dritten Formgebungseinrichtung nachbearbeiteten Abschnitt, die Außenfläche des Körpers hat sich gegenüber dem ersten Bearbeitungsschritt im wesentlichen nicht verändert.

Bezugszeichen 38a bezeichnet den eigentlichen Lagersitz. Die Form kann dabei beliebig den jeweiligen Zielsetzungen, d.h. unterschiedlichen Nabentypen angepasst werden. Wie aus Fig. 10 ersichtlich verläuft der Innenumfang des Lagersitzes 38a im wesentlichen parallel zur Rotationsachse L. Der Innenumfang des Endbereiches verläuft demgegenüber in einem vorgegebenen Winkel gegenüber der Rotationsachse L. Der Winkel liegt zwischen 0° und 90°, bevorzugt zwischen 0° und 40° und besonders bevorzugt zwischen 0° und 10°. Der mittlere Bereich der Nabe bleibt durch die Nachbearbeitung im wesentlichen unbeeinflusst.

An ihren Endabschnitten 41 weist die fertiggestellte Nabe eine Dicke zwischen 0,5 mm und 5 mm, bevorzugt zwischen 1 mm und 4 mm und besonders bevorzugt zwischen 2,3 mm und 3 mm auf. Der Innendurchmesser in den Endabschnitten liegt zwischen 1 cm und 5 cm, bevorzugt zwischen 2 cm und 4 cm und besonders bevorzugt zwischen 2,5 cm und 3,5 cm.

## Patentansprüche

1. Verfahren zur Herstellung von Komponenten insbesondere für Fahrräder und dergleichen mit folgenden Verfahrensschritten:
- Bereitstellen einer Wickeleinrichtung, welche wenigstens eine erste Formgebungseinrichtung aufweist;
- Aufbringen einer vorgegebenen Anzahl von Fasern auf die erste Formgebungseinrichtung;
- Aufbringen wenigstens eines ersten Vernetzungsmittels auf wenigstens einen Teil der Fasern;
- Einbringen der ersten Formgebungseinrichtung in eine zweite Formgebungseinrichung;
- räumliche Ausdehnung der ersten Formgebungseinrichtung mit wenigstens den Fasern und wenigstens dem ersten Vernetzungsmittel gegenüber der zweiten Formgebungseinrichtung, wobei die Formgebungseinrichtungen derart aufeinander abgestimmt sind, dass ein die Fasern und das Vernetzungsmittel aufweisender ausgedehnter Körper eine im wesentlichen konstante Dicke aufweist ;
- Entnehmen des ausgedehnten Körpers aus der zweiten Formgebungseinrichtung ;

2. Verfahren nach Anspruch 1, **dadurch gekennzeichnet, dass** der Abstand zwischen der ersten Formgebungseinrichtung und der zweiten Formgebungseinrichtung vor der Ausdehnung der ersten Formgebungseinrichtung im wesentlichen konstant ist.

3. Verfahren nach wenigstens einem der vorangegangenen Ansprüche, **dadurch gekennzeichnet, dass** in einem weiteren Verfahrensschritt die erste Formgebungseinrichtung aus dem ausgedehnten Körper entnommen wird.

4. Verfahren nach wenigstens einem der vorangegangenen Ansprüche, **dadurch gekennzeichnet, dass** die erste Formgebungseinrichtung vor dem Aufbringen der Fasern auf einen bevorzugt ein Metall aufweisenden Kern geschoben wird.

5. Verfahren nach wenigstens einem der vorangegangenen Ansprüche, **dadurch gekennzeichnet, dass** der ein Metall aufweisende Kern nach dem Aufbringen der Fasern aus der ersten Formgebungseinrichtung entfernt wird.

6. Verfahren nach wenigstens einem der vorangegangenen Ansprüche, **dadurch gekennzeichnet, dass** die erste Formgebungseinrichtung wenigstens teilweise aus einem flexiblen Material besteht.

7. Verfahren nach wenigstens einem der vorangegangenen Ansprüche, **dadurch gekennzeichnet, dass** die Ausdehnung der ersten Formgebungseinrichtung durch die Änderung wenigstens einer thermodynamischen Zustandsgröße, bevorzugt der Temperatur oder des Drucks bewirkt wird.

8. Verfahren nach wenigstens einem der vorangegangenen Ansprüche, **dadurch gekennzeichnet, dass** die zweite Formgebungseinrichtung wenigstens zwei im wesentlichen zueinander in der Innenkontur symmetrische Formgebungseinheiten aufweist.

9. Verfahren zur Herstellung einer Nabe insbesondere für Fahrräder und dergleichen mit folgenden Verfahrensschritten:
- Bereitstellen einer dritten Formgebungseinrichtung;
- Aufbringen einer vorgegebenen Anzahl von zweiten Fasern auf die dritte Formgebungseinrichtung;
- Aufbringen wenigstens eines zweiten Vernetzungsmittels auf wenigstens einen Teil der zweiten Fasern;
- Einbringen der dritten Formgebungseinrichtung in einen Vorkörper und Verbindung wenigstens der zweiten Fasern und des zweiten Vernetzungsmittels mit dem Vorkörper.

10. Verfahren nach wenigstens einem der vorangegangnen Ansprüche, **dadurch gekennzeichnet, dass** der Vorkörper der in dem Verfahren nach wenigstens einem der Ansprüche 1 - 8 hergestellte ausgedehnte Körper ist.

11. Verfahren nach wenigstens einem der vorangegangenen Ansprüche, **dadurch gekennzeichnet, dass** durch die Erhöhung der Temperatur eine Vernetzung der Fasern mit dem Vernetzungsmittel eintritt.

12. Verfahren nach wenigstens einem der vorangegangenen Ansprüche, **dadurch gekennzeichnet, dass** in einem weiteren Verfahrensschritt der ausgedehnte Körper und die dritte Formgebungseinrichtung mit den zweiten Fasern miteinander verspannt werden.

13. Verfahren nach wenigstens einem der vorangegangenen Ansprüche, **dadurch gekennzeichnet, dass** die dritte Formgebungseinrichtung eine Außenkontur aufweist, die im wesentlichen der Innenkontur der herzustellenden Nabe entspricht.

14. Verfahren nach wenigstens einem der vorangegangenen Ansprüche, **dadurch gekennzeichnet, dass** die Faser ein Material aufweist, das aus einer Gruppe von Materialien ausgewählt ist, welche Kohlenstoff, Glas, Aramit, Polyester, Diolen und dergleichen enthält.

15. Verfahren nach wenigstens einem der vorangegangenen Ansprüche, **dadurch gekennzeichnet, dass** die Faser zu einem Fasergewebe zusammengefügt ist, welches um wenigstens die erste Formgebungseinrichtung gewickelt wird.

16. Verfahren nach wenigstens einem der vorangegangenen Ansprüche, **dadurch gekennzeichnet, dass** das Vernetzungsmittel aus einer Gruppe von Vernetzungsmitteln ausgewählt ist, welche Harze wie Epoxydharze, Polyurethan, Polyester, Vinylester und dergleichen enthält.

17. Verwendung des Verfahrens nach wenigstens einem der vorangegangenen Ansprüche zur Herstellung einer Nabe, insbesondere für Fahrräder.

18. Nabe, insbesondere für Fahrräder und dergleichen, **dadurch gekennzeichnet, dass** diese einen Außenkörper mit einer im wesentlichen konstanten Dicke aufweist.

19. Nabe nach Anspruch 17, **dadurch gekennzeichnet, dass** diese an ihren Endabschnitten im wesentlichen in Umfangsrichtung gleichmäßig verteilte Öffnungen aufweist.
